(19) Europäisches Patentamt
European Patent Office
Office européen des brevets

(11) **EP 2 556 630 B1**

(12) **FASCICULE DE BREVET EUROPEEN**

(45) Date de publication et mention
de la délivrance du brevet:
**01.08.2018 Bulletin 2018/31**

(21) Numéro de dépôt: **11719342.5**

(22) Date de dépôt: **07.04.2011**

(51) Int Cl.:
***H04L 12/28*** *(2006.01)*          ***H04W 52/02*** *(2009.01)*
***G06F 1/32*** *(2006.01)*

(86) Numéro de dépôt international:
**PCT/FR2011/050784**

(87) Numéro de publication internationale:
**WO 2011/124853 (13.10.2011 Gazette 2011/41)**

(54) **PROCEDE DE CONTROLE D'UN POINT D'ACCES D'UNE PASSERELLE DOMESTIQUE D'UN RESEAU DOMESTIQUE**

VERFAHREN ZUR KONTROLLE EINES ZUGANGSPUNKTES EINES HEIMGATEWAYS EINES HEIMNETZWERKES

METHOD OF CONTROL OF AN ACCESS POINT OF A DOMESTIC GATEWAY OF A DOMESTIC NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.04.2010 FR 1052656**

(43) Date de publication de la demande:
**13.02.2013 Bulletin 2013/07**

(73) Titulaire: **Orange**
**75015 Paris (FR)**

(72) Inventeurs:
• **BERNARD, David**
**F-35560 Marcille Raoul (FR)**
• **CORDELIER, Gérard**
**F-35250 Saint Medard sur Ille (FR)**

(56) Documents cités:
**EP-A2- 1 876 846          EP-A2- 2 392 177**
**WO-A1-2010/034932     DE-U1-202004 017 602**
**US-A1- 2008 139 117     US-A1- 2009 213 821**
**US-A1- 2010 008 276**

• **ANDREAS MAEDER ET AL: "Signaling for Femto ABS Low-Duty Operation Mode (Section 16.4.10) ; C80216m-09_3031", IEEE DRAFT; C80216M-09_3031, IEEE-SA, PISCATAWAY, NJ USA, vol. 802.16m, 31 December 2009 (2009-12-31), pages 1-4, XP017794011, [retrieved on 2010-01-01]**
• **Manuel Somfy: "P R O T E X I A L", , 1 March 2010 (2010-03-01), XP055339677, Retrieved from the Internet: URL:https://www.somfy.ch/ch/file.cfm/Prote xial_parametrage_PC_FR.pdf?contentID=25413 1 [retrieved on 2017-01-27]**

EP 2 556 630 B1

**Description**

La présente invention concerne le domaine des passerelles domestiques qui réalisent l'interface entre au moins un équipement d'un réseau domestique et un réseau de télécommunication, et concerne, plus particulièrement, un procédé de contrôle d'une passerelle domestique afin d'économiser de l'énergie.

Un réseau domestique est un réseau informatique qui relie ensemble, de manière filaire ou sans fil, les appareils et équipements d'une maison aptes à communiquer ensemble. Un réseau domestique comporte généralement une passerelle domestique qui remplit une fonction de commutateur de réseau en reliant de manière filaire les équipements de la maison. La passerelle domestique comporte en outre un modem, du type ADSL, configuré pour relier le réseau domestique à un réseau de télécommunication du type internet. Ainsi, si un unique ordinateur est relié à la passerelle domestique, le réseau domestique est uniquement constitué dudit ordinateur et de ladite passerelle.

Une passerelle domestique, par exemple connue sous la désignation commerciale protégée « livebox », comprend généralement un point d'accès sans fil, utilisant notamment la technologie de transmission sans fil basée sur la norme de réseau radioélectrique IEEE 802.11 et ses évolutions, regroupées sous l'appellation Wifi (pour « Wireless Fidelity »).

Pour accéder au réseau domestique avec un équipement disposant d'une liaison radio, tel un ordinateur portable, un utilisateur saisit dans son équipement les paramètres d'identification du réseau. En particulier, il saisit ou sélectionne le nom du réseau domestique, connu de l'homme du métier sous l'abréviation SSID (pour « Service Set Identifier »), et, de manière optionnelle, 'une clé d'accès au réseau domestique, telle qu'une clé d'accès WEP (pour « Wired Equivalent Privacy ») ou WPA (pour « WiFi Protected Access »).

Par la suite, on entend par équipement tout dispositif apte à se connecter à la passerelle domestique de manière radio, tel un ordinateur portable ou un dispositif du type PDA (pour « Personnal Digital Assistant ») connu sous la désignation anglaise « Smartphone ».

Le point d'accès est généralement activé par défaut dans la passerelle domestique ce qui permet à un équipement de se connecter quand il le souhaite à la passerelle domestique. En pratique, les équipements d'un utilisateur ne se connectent que par intermittence audit point d'accès. Ainsi, la plupart du temps, en particulier la nuit, le point d'accès est activé alors qu'il est inutilisé.

Il a été calculé qu'une passerelle domestique consomme inutilement jusqu'à 1 Watt pour un point d'accès utilisant la technologie 802.11 a/b/g et jusqu'à 2 Watt pour un point d'accès utilisant la technologie 802.11 n couplée à la technologie MIMO, connue de l'homme du métier sous sa désignation anglaise « Multiple-Input Multiple-Output ».

Pour économiser de l'énergie, une solution immédiate serait que l'utilisateur éteigne sa passerelle domestique lorsqu'elle n'est pas utilisée. Cela présente des inconvénients lorsque la passerelle domestique relaie des communications téléphoniques dites VOIP pour « Voice Over Internet Protocol ». En effet, aucune communication téléphonique ne peut être reçue lorsque la passerelle est éteinte. Pour pouvoir de nouveau accéder au réseau domestique via le point d'accès, l'utilisateur doit allumer manuellement la passerelle ce qui est contraignant.

La demande de brevet D1 US2010/0008276 divulgue une passerelle avec un point d'accès doté d'un mode de veille déclenché lorsqu'aucune connexion avec un terminal n'est active. Cette solution présente cependant l'inconvénient de nécessiter une action de l'utilisateur sur le point d'accès afin de le sortir du mode de veille, avant qu'une connexion puisse être rétablie.

La demande de brevet internationale WO2010/124865 divulgue une station de base Femtocell alternativement disponible et indisponible dans un mode "low-duty" permettant une économie d'énergie, mais ce mode nécessite que les terminaux mobiles connectés à la station de base aient connaissance des intervalles durant lesquels la station de base est disponible.

Afin d'éliminer au moins certains de ces inconvénients, l'invention concerne un procédé de contrôle d'une passerelle domestique, destinée à connecter au moins un terminal domestique d'un réseau domestique informatique à un réseau de télécommunication, la passerelle domestique comportant un point d'accès configuré pour établir une connexion entre ledit terminal domestique et la passerelle domestique, procédé comprenant une étape de vérification de l'état de la connexion entre la passerelle domestique et ledit

terminal domestique via le point d'accès, et une étape de mise en veille cyclique dudit point d'accès si ladite connexion est inactive, dans laquelle le point d'accès est alternativement allumé pendant une durée d'activité et éteint pendant une durée de sommeil. En veille cyclique, le point d'accès est réveillé par intermittence de manière à limiter les interruptions de service du point d'accès. Lorsque plusieurs terminaux domestiques sont connectés au point d'accès de la passerelle, le procédé met en veille le point d'accès si tous les terminaux domestiques sont inactifs.

Selon une variante, le point d'accès comporte un module de communication radio, le procédé met en veille ledit module si la connexion est inactive.

Selon l'invention, le point d'accès est mis en veille pour limiter la consommation d'énergie de la passerelle domestique, les autres fonctions de la passerelle domestique étant toujours opérationnelles (téléphonie, commutateur de réseau, etc.). En outre, comme la mise en veille est automatique, aucune action spécifique de l'utilisateur n'est nécessaire ce qui est pratique et augmente l'occurrence des mises en veille.

Selon un mode de mise en oeuvre, le point d'accès comprenant une pluralité de modules fonctionnels dont un module de communication radio configuré pour établir une connexion radio entre ledit terminal domestique et la passerelle domestique, le procédé comprend une étape de mise en veille du module de communication radio du point d'accès dans laquelle ledit module de communication radio est alternativement allumé et éteint pendant que les autres modules fonctionnels demeurent allumés. Seul le module de communication radio, qui consomme une quantité importante d'énergie, est éteint. Comme les autres modules du point d'accès demeurent allumés, il n'existe pas de latence lors du réveil du module de communication, la connexion entre la passerelle domestique et le terminal domestique étant établie sans retard.

Le rapport de cycle a, correspondant au rapport de la durée d'activité sur la durée totale du cycle, est compris entre 0.2 et 0.8. Ainsi, la passerelle domestique réalise une économie d'énergie liée à la consommation électrique du point d'accès comprise entre 20% et 80% de consommation d'énergie totale. Par ailleurs, un tel rapport de cycle permet une continuité du service offert par le point d'accès.

Selon une variante, le procédé comporte une étape de réveil du point d'accès suite à la réception, par ledit point d'accès en veille cyclique, d'une requête en connexion à la passerelle domestique d'un terminal indéfini. Ainsi, le point d'accès se réveille automatiquement, l'utilisateur n'ayant aucune action spécifique à réaliser sur la passerelle pour la réveiller ou pour l'éteindre.

Le procédé comporte une étape de contrôle de la requête en connexion dudit terminal indéfini dans laquelle la passerelle domestique contrôle si le terminal indéfini est un terminal domestique autorisé à se connecter audit point d'accès, le procédé enclenchant l'étape de réveil dudit point d'accès si le terminal indéfini est un terminal autorisé, le procédé inhibant l'étape de réveil dudit point d'accès si le terminal indéfini n'est pas un terminal autorisé. Ainsi, pour éviter un réveil intempestif du point d'accès, seuls les terminaux domestiques autorisés permettent le réveil du point d'accès, les terminaux visiteurs, dont la connexion n'est pas désirée, étant ignorés. On augmente ainsi de manière importante les économies d'énergie en limitant la probabilité de réveil du point d'accès.

Selon un aspect de l'invention, la passerelle domestique possédant une mémoire dans laquelle est stocké au moins un identifiant unique d'un terminal domestique autorisé à se connecter audit point d'accès, le procédé comporte une étape de contrôle de la requête en connexion dudit terminal indéfini dans laquelle :

- la passerelle domestique reçoit la requête en connexion à la passerelle domestique d'un terminal indéfini, la requête en connexion comprenant l'identifiant unique du terminal indéfini ;
- la passerelle domestique compare l'identifiant unique du terminal indéfini, compris dans la requête en connexion, à l'identifiant unique du terminal domestique de la mémoire, la passerelle domestique enclenchant l'étape de réveil dudit point d'accès en cas de correspondance et inhibant l'étape de réveil dudit point d'accès dans le cas contraire.

En filtrant les terminaux par leurs identifiants uniques et en autorisant un réveil que pour des terminaux domestiques, le réveil du point d'accès est sélectif et permet de réaliser des économies d'énergie importantes.

Selon un aspect de l'invention, la passerelle domestique possédant une mémoire dans laquelle est stockée une table des connexions établies entre la passerelle domestique et au moins un terminal domestique via le point d'accès, le procédé comprend une étape de lecture de la table des connexions de la mémoire et une étape de mise en veille du point d'accès si la table dynamique ne comprend aucune connexion. Par lecture de la table dynamique des connexions, le point d'accès peut être avantageusement mis en veille de manière simple et automatique.

L'invention concerne également une passerelle domestique, destinée à connecter au moins un terminal domestique d'un réseau domestique informatique à un réseau de télécommunication, pour la mise en oeuvre du procédé présenté précédemment, passerelle comprenant :

- un point d'accès configuré pour établir une connexion entre ledit terminal domestique et la passerelle domestique;
- une mémoire dans laquelle est stockée une table dynamique des connexions entre la passerelle domestique et au moins un terminal domestique via le point d'accès; et
- un module de mise en veille agencé pour mettre en veille cycliquement ledit point d'accès si la table dynamique ne comprend aucune connexion, en effectuant alternativement un allumage dudit point d'accès pendant une durée d'activité et une extinction dudit point d'accès pendant une durée de sommeil.

L'invention concerne également un programme d'ordinateur pour l'exécution d'un procédé de contrôle tel que présenté précédemment ainsi qu'un support d'enregistrement dans lequel est stocké ledit programme.

D'autres caractéristiques et avantages de l'invention apparaîtront lors de la description qui suit faite en regard de figures annexées données à titre d'exemples non limitatifs.

- la figure 1 est une représentation schématique d'un ordinateur fixe et d'un ordinateur portable établissant des connexions avec une passerelle domestique reliée au réseau internet ;
- la figure 2 est une représentation schématique des composants d'une passerelle domestique selon l'invention reliée au réseau internet ;

- la figure 3 est une représentation de l'état de fonctionnement d'un point d'accès de la passerelle domestique de la figure 2 en fonction des requêtes en connexion reçues par des terminaux domestique et visiteur ; et
- la figure 4 est un diagramme schématique des étapes du procédé de contrôle (mise en veille et réveil) du point d'accès selon l'invention.

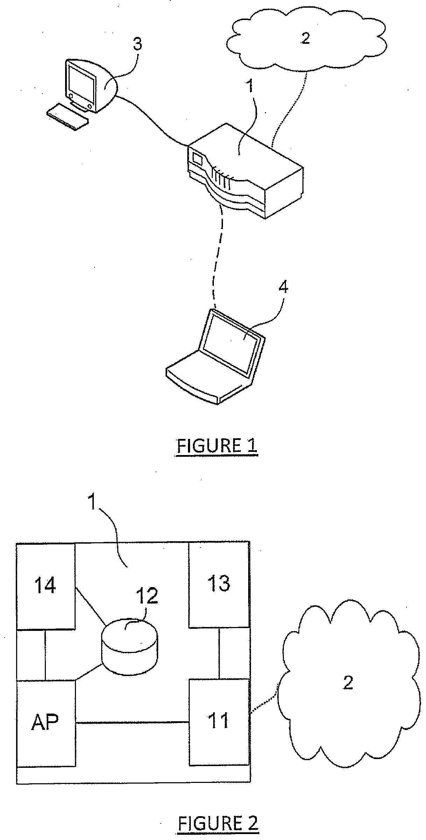

En référence à la figure 1, une passerelle domestique d'un réseau domestique, désignée par la suite passerelle domestique 1, est reliée au réseau internet 2 par une liaison haut débit du type ADSL. Le réseau domestique est ici un réseau local IP (« Internet Protocol »).

En référence à la figure 2, la passerelle domestique 1, telle que celle connue sous la dénomination commerciale « livebox », comprend ici un modem ADSL 11, un commutateur réseau 13 permettant de connecter des équipements de manière filaire à la passerelle domestique, un point d'accès AP permettant de connecter des équipements à la passerelle domestique de manière radio, par exemple, via le protocole WIFI, ainsi qu'une mémoire 12 reliée au point d'accès AP stockant, entre autres, les paramètres d'identification et d'association des équipements domestique au point d'accès AP. La passerelle domestique 1 comprend en outre un module 14 de mise en veille du point d'accès AP relié audit point d'accès AP.

Les équipements connectés de manière filaire ou sans fil à la passerelle domestique 1 forment le réseau domestique. Lorsque plusieurs équipements appartiennent à un même réseau, ces derniers peuvent échanger des données entre eux de manière rapide et sécurisée. Ainsi, en référence à la figure 1, le réseau domestique comprend un ordinateur 3 relié de manière filaire (trait continu sur la figure 1) au commutateur réseau 13 de la passerelle domestique 1 et un ordinateur portable 4 relié de manière radio (trait discontinu sur la figure 1) au point d'accès AP, le réseau domestique étant relié à internet 2 via le modem ADSL 11. Les ordinateurs 3, 4 sont encore dénommés terminaux domestiques.

Dans cet exemple, le point d'accès AP de la passerelle domestique 1 comporte une pluralité de modules fonctionnels (module d'alimentation générale, module de liaison de données, etc.) dont un module de communication radio configuré pour établir une connexion radio entre un terminal domestique et la passerelle domestique. Ainsi, l'ordinateur portable 4 se connecte au module de communication radio du point d'accès AP pour se connecter à la passerelle domestique 1.

L'invention va être présentée avec un terminal domestique qui est un équipement qui a déjà été paramétré pour accéder au réseau domestique.

Pour rappel, en référence à la figure 1, pour établir une connexion entre un terminal domestique 4, ici un ordinateur portable, et la passerelle domestique 1, un utilisateur saisit dans le terminal domestique 4 les paramètres d'identification au point d'accès AP qui ont été fournis par l'opérateur de la passerelle domestique 1. En particulier, l'utilisateur domestique saisit un identifiant du réseau domestique, ici le nom du réseau domestique, c'est-à-dire son SSID, et, de manière optionnelle, une clé d'accès au réseau domestique, telle une clé WEP ou WPA définies précédemment.

Lors de la première identification du terminal domestique 4 auprès de la passerelle domestique 1, le terminal domestique 4 transmet son adresse physique unique MAC (pour « Media Access Control »), correspondant à l'adresse de son interface réseau, à la passerelle domestique 1 qui la sauvegarde dans sa mémoire 12 pour les identifications ultérieures.

Ainsi, à chaque fois que le terminal domestique 4 souhaite se connecter à la passerelle domestique 1, le terminal domestique 4 envoie une requête en connexion à la passerelle domestique 1, qui comporte l'identifiant du réseau domestique et l'adresse physique unique MAC du terminal domestique 4. Comme l'adresse physique unique MAC est connue du point d'accès AP, un accès au réseau est accordé au terminal domestique 4 et une connexion radio est établie entre la passerelle domestique et le terminal domestique.

Par requête en connexion, on entend aussi une requête en réponse à une balise émise par un point d'accès (la balise et la requête en réponse étant respectivement connues de l'homme du métier sous leurs désignations anglaises « beacon » et « probe request » définies par la norme IEEE 802.11) ou une requête en association d'un terminal sans émission préalable de balise par le point d'accès.

Pour que le terminal domestique 4 accède au réseau domestique via le point d'accès AP, il est nécessaire que le module de communication radio du point d'accès AP soit allumé afin d'établir une connexion radio et échanger des données entre la passerelle domestique 1 et le terminal domestique 4 de manière radio.

L'invention se propose de procéder à une mise en veille du point d'accès AP de la passerelle domestique 1 afin d'économiser de l'énergie. Par mise en veille du point d'accès AP, on entend une coupure de l'alimentation du module de communication radio du point d'accès AP ce qui permet de limiter la consommation électrique de la passerelle domestique 1. Lorsque le point d'accès AP est mis en veille, aucun terminal domestique 4 ne peut se connecter à la passerelle domestique 1 via le point d'accès-AP. Autrement dit, le point d'accès AP ne peut pas communiquer par liaison radio lorsqu'il est en veille.

Le module 14 de mise en veille du point d'accès AP de la passerelle domestique 1 est agencé pour mettre en veille le point d'accès AP en cas d'inactivité de tous les terminaux domestiques 4. Autrement dit, tous les terminaux qui sont déjà paramétrés avec le point d'accès AP doivent être inactifs afin d'éviter de rompre une connexion entre un desdits terminaux domestiques 4 et la passerelle domestique via le point d'accès AP.

On considère qu'un terminal domestique 4 est inactif s'il est déconnecté du point d'accès AP et qu'il n'échange pas d'informations avec ledit point d'accès AP.

La mémoire 12 de la passerelle domestique 1 est reliée au point d'accès AP. En référence à la figure 2, la mémoire 12 est dissociée du point d'accès AP mais elle pourrait également être intégrée audit point d'accès AP. La mémoire 12 comprend une table dynamique (non représentée) dans laquelle sont répertoriés les connexions des terminaux domestiques 4 avec le point d'accès AP, connus de l'homme du métier sous leur acronyme anglais « AID » pour « Association Identifier ». Un paramètre d'association AID est un numéro unique qui permet de référencer une connexion entre un terminal domestique 4 et la passerelle domestique via un point d'accès AP. Ainsi, si deux terminaux domestiques 4 sont connectés au réseau domestique via le point d'accès AP, la table des connexions comprend deux paramètres d'association AID1, AID2.

Dans notre exemple, le module de mise en veille 14 du point d'accès AP vérifie à intervalles de temps réguliers si la table des connexions de la mémoire 12 comprend des paramètres d'association AID. Si la table est vide, le module de mise en veille 14 en déduit qu'aucune connexion n'est active entre le terminal domestique 4 et la passerelle domestique 1 via le point d'accès AP, ce dernier étant alors mis en veille par le module de mise en veille 14.

Une solution d'économie d'énergie peut consister à programmer la mise en veille. Selon cette solution, le point d'accès AP, qui est en veille, est réveillé de manière programmée par le module de mise en veille 14, c'est-à-dire qu'il se réveille à un instant prédéterminé après sa mise en veille.

A titre d'exemple, le module de mise en veille 14 est configuré pour réveiller le point d'accès AP en fonction de l'instant de sa mise en veille. Si le point d'accès AP est mis en veille au cours d'une période de temps cible prédéterminée, le module de mise en veille 14 réveille le point d'accès AP après une durée de repos déterminée ou à un instant déterminé.

A titre d'exemple, si le point d'accès AP se met en veille pendant la nuit, entre 23h et 6h, le module de mise en veille 14 réveille le point d'accès AP qu'après une durée de repos de 7h ou à 8h du matin. De manière avantageuse, la période de temps cible peut être paramétrée par l'utilisateur en fonction de son mode de vie et de ses périodes d'utilisation du réseau domestique et du réseau de télécommunication via le point d'accès AP de la passerelle domestique 1. De même, la durée de repos ou l'instant de réveil peuvent également être programmés selon les souhaits de l'utilisateur.

A titre d'exemple, l'utilisateur accède aux paramètres de mise en veille et de réveil par une interface WEB accessible via le réseau de télécommunication internet ou le réseau domestique.

Dans une autre solution d'économie d'énergie, selon un mode de mise en oeuvre de l'invention, le point d'accès AP est en veille cyclique. Pendant un cycle de veille, le module de mise en veille 14 allume alternativement le point d'accès AP pendant une durée d'activité Ta et l'éteint pendant une durée de sommeil Ts.

Par la suite, on définit un rapport de cycle α, correspondant au rapport de la durée d'activité Ta sur la durée totale du cycle, c'est-à-dire la somme de la durée d'activité Ta et de la durée de sommeil Ts. Le rapport de cycle α est défini par la formule ci-dessous :

$$\alpha = \frac{Ta}{Ta + Ts}$$

Pendant la durée de sommeil Ts, le point d'accès AP est éteint et ne peut pas recevoir de données depuis un terminal domestique 4 ou tout autre terminal. Pendant la durée d'activité Ta, le point d'accès AP est allumé et peut recevoir des données depuis un terminal domestique 4 ou tout autre terminal.

Si une requête en connexion R d'un terminal est reçue par un point d'accès AP pendant sa période d'activité Ta, le module de mise en veille 14 réveille le point d'accès AP qui sort de sa mise en veille cyclique pour échanger des données avec ledit terminal. Le point d'accès AP se mettra de nouveau en veille lorsque ledit terminal sera déconnecté et qu'aucun autre terminal n'est connecté.

A titre d'exemple, grâce à une mise en veille cyclique du point d'accès AP avec un rapport de cycle α de l'ordre de 0.5, on économise 50% de l'énergie consommée par l'interface radio du point d'accès AP ce qui représente une économie significative par la passerelle domestique 1. Contrairement à la solution dans laquelle la mise en veille est programmée, un terminal peut se connecter immédiatement au point d'accès AP pendant sa mise en veille cyclique lorsque sa requête en connexion R est reçue pendant une période d'activité Ta. Le point d'accès AP est uniquement indisponible pendant la durée de sommeil Ts. En choisissant une durée de sommeil Ts de faible durée, la durée d'indisponibilité n'est pas perceptible par l'utilisateur du terminal et il n'y a pour lui aucune interruption de service.

Pour assurer un compromis entre une économie d'énergie et une continuité de service, un rapport de cycle α compris entre 0.2 et 0.8, de préférence égal à 0.5, est préconisé. De même, une durée de sommeil Ts comprise entre 1ms et 100ms, de préférence égale à 50 ms, est préconisée. La durée de sommeil Ts est limitée, d'une part, par la durée maximale d'indisponibilité tolérable par l'utilisateur (de l'ordre de quelques centaines de millisecondes) et, d'autre part, par la durée de transition de l'état « éteint » à l'état « allumé » du point d'accès AP (de l'ordre de quelques micro secondes). Seul le module de communication radio étant éteint, la transition est réalisée sans latence.

Selon un certain aspect de ce mode de mise en oeuvre de l'invention, pendant la durée d'activité Ta, le point d'accès AP est allumé et ne se réveille qu'à la réception d'une requête en connexion d'un terminal domestique 4. Tout autre terminal inconnu, qui ne s'est jamais connecté audit point d'accès AP, est désigné par la suite « terminal visiteur ».

La mémoire 12 de la passerelle domestique 1 comporte, outre la table des connexions, une table d'identifiants comprenant les identifiant uniques des terminaux domestiques 4 qui ont déjà été autorisés à accéder au réseau domestique via le point d'accès AP. Dans cet exemple, l'identifiant unique d'un terminal est l'adresse physique unique MAC (pour « Media Access Control ») correspondant à l'adresse de son interface réseau.

Lorsqu'un terminal se connecte au réseau domestique via le point d'accès AP, le terminal envoie une requête en connexion R qui comprend l'adresse physique unique MAC dudit terminal, l'identifiant du réseau domestique (SSID) et une clé d'accès au réseau (WEP/WPA). Le point d'accès AP enregistre les adresses physiques uniques des adresses MAC des terminaux pour lesquels il a autorisé un accès, c'est-à-dire les terminaux domestiques 4. Ainsi, la mémoire 12 de la passerelle 1 comprend un identifiant unique de chaque terminal domestique 4. Selon une variante de l'invention, la table des identifiants uniques de la mémoire 12 ne comprend que les identifiants des terminaux qui se sont connectés au point d'accès dans un délai déterminé, par exemple, moins d'une semaine. Les identifiants uniques sont conservés temporairement pour augmenter la sécurité et la confidentialité.

Si le point d'accès AP, en veille cyclique, reçoit une requête en connexion R au réseau domestique émise par un terminal indéfini, la passerelle domestique 1 compare l'identifiant unique MAC du terminal indéfini, qui est compris dans la requête en connexion R, à la table d'identifiants de la mémoire 12 de la passerelle domestique 1. Le point d'accès AP se réveille en cas de correspondance (le terminal indéfini est un terminal domestique 4) et reste en veille cyclique dans le cas contraire (le terminal indéfini est un terminal visiteur). Une requête en connexion R émise par un terminal visiteur ne permet pas de réveiller le point d'accès AP en veille cyclique.

Les terminaux domestiques 4 sont privilégiés tandis que les terminaux visiteurs sont ignorés. Cela permet d'augmenter avantageusement la probabilité que le point d'accès AP se mette en veille et favorise une plus grande économie d'énergie.

En effet, si un terminal visiteur souhaite se connecter, par exemple, au réseau internet via une passerelle domestique, le terminal visiteur envoie des requêtes en connexion R à tous les points d'accès AP de toutes les passerelles domestiques qu'il détecte, les empêchant de se mettre en veille. Grâce à cette mise en oeuvre de l'invention, tout réveil intempestif du point d'accès AP est évité, favorisant ainsi une économie d'énergie.

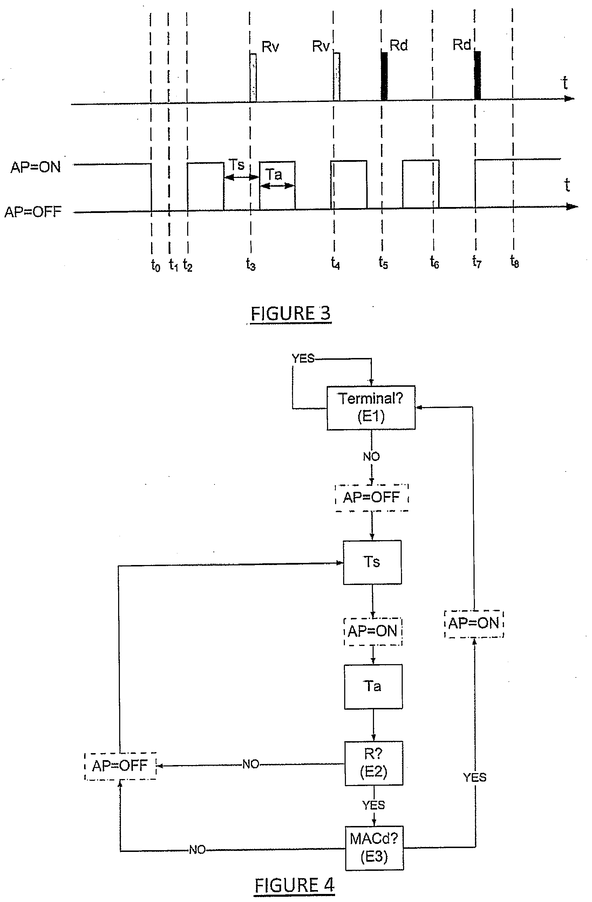

Un exemple de ce mode de mise en oeuvre de l'invention va être maintenant détaillé en référence aux figures 3 et 4.

Un utilisateur utilise un terminal domestique 4, ici un ordinateur portable 4, pour accéder au réseau domestique via le point d'accès AP afin de consulter ses emails, le point d'accès AP étant allumé (AP=ON). A intervalles de temps réguliers, le point d'accès AP consulte la table de connexions de la mémoire 12 de la passerelle 1 pour vérifier si des terminaux domestiques 4 sont encore connectés. Cette étape correspond à l'étape E1 du diagramme de la figure 4. Tant que la connexion entre l'ordinateur portable 4 et la passerelle domestique est active, le point d'accès AP reste alimenté.

Après avoir consulté ses emails, l'utilisateur éteint son ordinateur 4 et quitte son domicile. L'ordinateur 4 est alors déconnecté du point d'accès AP. Le module de mise en veille 14 lit la table des connexions de la mémoire 12 qui est vide et en déduit que les terminaux domestiques 4 sont inactifs. Le module de mise en veille 14 met alors en veille cyclique le point d'accès AP (AP=OFF) à l'instant $t_0$ comme représenté sur la figure 3, pendant une durée de sommeil Ts, comme représenté sur la figure 4.

Pendant un cycle de veille, une période de sommeil de durée Ts suit une période d'activité de durée Ta. En référence à la figure 3, le rapport de cycle $\alpha$ est égal à 0.5, la durée d'une période d'activité étant d'environ 50 ms.

Toujours en référence à la figure 3, à l'instant $t_1$, le point d'accès AP est éteint en période de repos Ts pour économiser de l'énergie, aucune connexion au point d'accès AP n'étant possible. A l'instant $t_2$, le point d'accès AP est allumé en période d'activité Ta pour vérifier si un terminal domestique souhaite accéder au réseau domestique. Cette étape correspond à l'étape E2 du diagramme de la figure 4 dans laquelle le point d'accès AP est apte à recevoir des requêtes en connexion R. Etant donné qu'aucune requête en connexion n'est reçue à l'instant $t_2$ pendant la période d'activité Ta, le point d'accès AP demeure en veille cyclique et s'éteint (AP=OFF) pendant une durée de sommeil Ts.

A l'instant $t_3$, une requête en connexion Rv, est envoyée par un terminal visiteur pendant la période de repos Ts. Dans cet exemple, ce terminal visiteur est un ordinateur portable d'un voisin de l'utilisateur qui cherche à se connecter au réseau internet via la passerelle domestique 1. Comme le point d'accès AP est éteint, aucune connexion au point d'accès AP n'est réalisée malgré la requête en connexion Rv. Le point d'accès AP se réveille (AP=ON) après une durée de sommeil Ts.

A l'instant $t_4$, une nouvelle requête en connexion Rv est envoyée par le terminal visiteur mais cette fois pendant la période d'activité Ta du point d'accès AP (AP=ON). Le point d'accès AP est allumé et la passerelle domestique 1 vérifie si un terminal souhaite accéder au réseau domestique (Etape E2). Comme le point d'accès AP est allumé et qu'il reçoit effectivement une requête en connexion R, le module de mise en veille 14 passe de l'étape E2 de la figure 4 à l'étape E3 dans laquelle le module de mise en veille 14 lit les identifiants uniques MAC compris dans les requêtes en connexion R reçues par le point d'accès AP et les compare à la table des identifiants de la mémoire 12.

A l'instant $t_4$, le module de mise en veille 14 lit l'identifiant unique MACv de la requête en connexion Rv du terminal visiteur et compare l'identifiant du terminal visiteur MACv à la table d'identifiants de la mémoire 12 de la passerelle domestique 1. L'identifiant unique du terminal visiteur MACv n'étant pas compris dans la liste des identifiants, aucune connexion au point d'accès AP n'est réalisée. Le point d'accès AP reste en veille cyclique ce qui permet d'économiser de l'énergie et s'éteint de nouveau (AP=OFF) pour une durée de sommeil Ts.

Lorsque l'utilisateur revient à son domicile, il allume de nouveau son ordinateur portable 4 (terminal domestique) pour consulter à nouveau ses emails. A l'instant $t_5$, une requête en connexion Rd est envoyée par le terminal domestique pendant la période de sommeil Ts du point d'accès AP. Comme le point d'accès AP est éteint, aucune connexion au point d'accès AP n'est réalisée malgré la requête en connexion Rd du terminal domestique.

A l'instant $t_6$, une nouvelle requête en connexion Rd est envoyée par le terminal domestique mais cette fois pendant la période d'activité Ta du point d'accès AP (Etape E2). A l'étape E3, le module de mise en veille 14 lit l'identifiant unique MACd de la requête en connexion Rd du terminal domestique et compare l'identifiant du terminal domestique MACd à la table d'identifiants de la mémoire 12 de la passerelle domestique 1. Comme l'identifiant unique du terminal domestique MACd est compris dans la liste des identifiants, le point d'accès AP est réveillé (AP=ON) et l'utilisateur peut lire ses emails (Etape E1). A l'instant $t_8$, le point d'accès AP reste éveillé étant donné que l'ordinateur portable 4 est connecté audit point d'accès AP.

L'utilisateur a ainsi réveillé le point d'accès AP de manière automatique sans effectuer d'actions spécifiques sur le point d'accès AP ou sur son ordinateur portable 4. Le procédé d'économie d'énergie selon l'invention ne présente pas d'inconvénients pour l'utilisateur, la mise en veille et le réveil du point d'accès étant automatiques.

Toujours en référence à la figure 3, l'interruption de service pour l'utilisateur correspond à la période entre deux requêtes en connexion Rd de la part du terminal domestique 4. L'interruption de service de l'ordre de 100 ms sur la figure 3 n'est pas perceptible par l'utilisateur.

Le procédé de contrôle de point d'accès selon l'invention permet ainsi de limiter la consommation électrique dudit point d'accès AP tout en conservant une qualité et une continuité du service fourni par le point d'accès AP.

En outre, un tel procédé de mise en veille est compatible avec les procédés de contrôle d'activité qui existent pour les interfaces réseau des terminaux domestique du type APSD pour « Automatic Power Save Delivery ». Un ordinateur portable 4 possède parfois une interface réseau, par exemple une carte Wifi, qui peut se mettre elle-même en veille pour limiter sa consommation électrique lorsqu'elle est connectée au point d'accès AP mais qu'elle n'est pas utilisée pendant une période de temps déterminée. Lors de la mise en veille de l'interface réseau, cette dernière n'est plus alimentée et le terminal domestique se déconnecte du point d'accès AP. Le point d'accès AP se met également en veille étant donné qu'aucun terminal domestique 4 n'est connecté. De même, lorsque l'ordinateur portable 4 se réveille, le point d'accès AP se réveille également lorsqu'une requête en connexion R est émise pendant une période d'activité Ta de la veille cyclique du point d'accès AP.

Le procédé de contrôle d'un point d'accès AP selon l'invention permet ainsi d'économiser de l'énergie de manière synergique avec les procédés de mise en veille des terminaux domestiques.

**Revendications**

1. Procédé de contrôle d'une passerelle domestique (1), destinée à connecter au moins un terminal domestique (4) d'un réseau domestique informatique à un réseau de télécommunication (2), la passerelle domestique (1) comportant un point d'accès (AP) configuré pour établir une connexion Wifi entre ledit terminal domestique (4) et la passerelle domestique (1), le procédé étant **caractérisé par le fait qu'**il comprend :

   - une étape de vérification de l'état de la connexion entre la passerelle domestique (1) et ledit terminal domestique (4) via le point d'accès (AP), et
   - une étape de mise en veille cyclique dudit point d'accès (AP) si ladite connexion est inactive, dans laquelle le point d'accès (AP) est alternativement allumé pendant une durée d'activité (Ta) du point d'accès et éteint pendant une durée de sommeil (Ts) du point d'accès, le rapport de la durée d'activité sur la durée totale d'un cycle étant compris entre 0.2 et 0.8, et aucune information n'étant transmise par le point d'accès relativement aux durées de sommeil pendant lesquelles le point d'accès est éteint et ne peut recevoir de données depuis l'au moins un terminal.

2. Procédé selon la revendication 1, dans lequel, le point d'accès (AP) comprenant une pluralité de modules fonctionnels dont un module de communication radio configuré pour établir une connexion radio entre ledit terminal domestique (4) et la passerelle domestique (1), le procédé comprend une étape de mise en veille du module de communication radio du point d'accès (AP) dans laquelle ledit module de communication radio est alternativement allumé et éteint pendant que les autres modules fonctionnels demeurent allumés.

3.  Procédé selon l'une des revendications 1 à 2, dans lequel le procédé comporte une étape de réveil du point d'accès (AP) suite à la réception, par ledit point d'accès en veille cyclique, d'une requête en connexion (R) à la passerelle domestique d'un terminal indéfini (4).

4.  Procédé selon la revendication 43, dans lequel le procédé comporte une étape de contrôle de la requête en connexion (R) dudit terminal indéfini dans laquelle la passerelle domestique (1) contrôle si le terminal indéfini est un terminal domestique autorisé à se connecter audit point d'accès (A), le procédé enclenche l'étape de réveil dudit point d'accès (AP) si le terminal indéfini est un terminal autorisé, le procédé inhibant l'étape de réveil dudit point d'accès (AP) si le terminal indéfini n'est pas un terminal autorisé.

5.  Procédé selon l'une des revendications 3 à 4, dans lequel, la passerelle domestique (1) possédant une mémoire (12) dans laquelle est stocké au moins un identifiant unique (MACd) d'un terminal domestique (4) autorisé à se connecter audit point d'accès (AP), le procédé comporte une étape de contrôle de la requête en connexion (R) dudit terminal indéfini dans laquelle :

    i. la passerelle domestique (1) reçoit la requête en connexion (R) à la passerelle domestique (1) d'un terminal indéfini (4), la requête en connexion (R) comprenant l'identifiant unique (MAC) du terminal indéfini ;
    ii. la passerelle domestique (1) compare l'identifiant unique (MAC) du terminal indéfini (4), compris dans la requête en connexion (R), à l'identifiant unique (MACd) du terminal domestique (4) de la mémoire (12), la passerelle domestique enclenchant l'étape de réveil dudit point d'accès (AP) en cas de correspondance et inhibant l'étape de réveil dudit point d'accès (AP) dans le cas contraire.

6.  Procédé selon l'une des revendications précédentes, dans lequel, la passerelle domestique possédant une mémoire (12) dans laquelle est stockée une table des connexions établies entre la passerelle domestique (1) et au moins un terminal domestique (2) via le point d'accès (AP), le procédé comprend une étape de lecture de la table des connexions de la mémoire (12) et une étape de mise en veille du point d'accès (AP) si la table dynamique ne comprend aucune connexion.

7.  Passerelle domestique, destinée à connecter au moins un terminal domestique d'un réseau domestique informatique à un réseau de télécommunication (2), pour la mise en oeuvre du procédé selon l'une des revendications 1 à 6, passerelle comprenant :

    - un point d'accès (AP) configuré pour établir une connexion Wifi entre ledit terminal domestique (4) et la passerelle domestique (1);
    - une mémoire (12) dans laquelle est stockée une table dynamique des connexions entre la passerelle domestique (1) et au moins un terminal domestique (4) via le point d'accès (AP) ; et
    - un module de mise en veille (14) agencé pour mettre en veille cycliquement ledit point d'accès (AP) si la table dynamique ne comprend aucune connexion, en effectuant alternativement un allumage dudit point d'accès (AP) pendant une durée d'activité (Ta) du point d'accès et une extinction dudit point d'accès (AP) pendant une durée de sommeil (Ts) du point d'accès, le rapport de la durée d'activité sur la durée totale d'un cycle étant compris entre 0.2 et 0.8, et aucune information n'étant transmise relativement aux durées de sommeil pendant lesquelles le point d'accès est éteint et ne peut recevoir de données depuis l'au moins un terminal.

8.  Programme d'ordinateur comprenant des instructions qui, lorsque le programme est exécuté par un ordinateur, conduisent celui-ci à mettre en oeuvre les étapes du procédé selon l'une quelconque des revendications 1 à 6.

**Patentansprüche**

1.  Verfahren zur Kontrolle eines Heim-Gateways (1), das dazu bestimmt ist, mindestens ein Heim-Endgerät (4) eines Heim-Computernetzes mit einem Telekommunikationsnetz (2) zu verbinden, wobei das Heim-Gateway (1) einen Zugangspunkt (AP) aufweist, der konfiguriert ist, eine WiFi-Verbindung zwischen dem Heim-Endgerät (4) und dem Heim-Gateway (1) aufzubauen, wobei das Verfahren **dadurch gekennzeichnet ist, dass** es enthält:

    - einen Schritt der Überprüfung des Zustands der Verbindung zwischen dem Heim-Gateway (1) und dem Heim-Endgerät (4) über den Zugangspunkt (AP), und
    - einen Schritt der zyklischen Standby-Schaltung des Zugangspunkts (AP), wenn die Verbindung inaktiv ist, wobei der Zugangspunkt (AP) abwechselnd während einer Aktivitätsdauer (Ta) des Zugangspunkts eingeschaltet und während einer Ruhedauer (Ts) des Zugangspunkts ausgeschaltet ist, wobei das Verhältnis der Aktivitätsdauer zur Gesamtdauer eines Zyklus zwischen 0,2 und 0,8 liegt, und keine Information vom Zugangspunkt bezüglich der Ruhedauern übertragen wird, während denen der Zugangspunkt ausgeschaltet ist und keine Daten von dem mindestens einen Endgerät empfangen kann.

2. Verfahren nach Anspruch 1, wobei, da der Zugangspunkt (AP) eine Vielzahl von Funktionsmodulen enthält, darunter ein Funkkommunikationsmodul, das konfiguriert ist, eine Funkverbindung zwischen dem Heim-Endgerät (4) und dem Heim-Gateway (1) aufzubauen, das Verfahren einen Schritt der Standby-Schaltung des Funkkommunikationsmoduls des Zugangspunkts (AP) enthält, wobei das Funkkommunikationsmodul abwechselnd eingeschaltet und ausgeschaltet wird, während die anderen Funktionsmodule eingeschaltet bleiben.

3. Verfahren nach einem der Ansprüche 1 bis 2, wobei das Verfahren einen Schritt des Weckens des Zugangspunkts (AP) nach dem Empfang, durch den Zugangspunkt im zyklischen Standby, einer Verbindungsanforderung (R) mit dem Heim-Gateway von einem nicht definierten Endgeräts (4) enthält.

4. Verfahren nach Anspruch 3, wobei das Verfahren einen Schritt der Kontrolle der Verbindungsanforderung (R) des nicht definierten Endgeräts aufweist, in dem das Heim-Gateway (1) kontrolliert, ob das nicht definierte Endgerät ein Heim-Endgerät ist, das autorisiert ist, sich mit dem Zugangspunkt (A) zu verbinden, das Verfahren den Schritt des Weckens des Zugangspunkts (AP) auslöst, wenn das nicht definierte Endgerät ein autorisiertes Endgerät ist, wobei das Verfahren den Weckschritt des Zugangspunkts (AP) verhindert, wenn das nicht definierte Endgerät kein autorisiertes Endgerät ist.

5. Verfahren nach einem der Ansprüche 3 bis 4, wobei, da das Heim-Gateway (1) einen Speicher (12) besitzt, in dem mindestens eine einzige Kennung (MACd) eines Heim-Endgeräts (4) gespeichert ist, das autorisiert ist, sich mit dem Zugangspunkt (AP) zu verbinden, das Verfahren einen Schritt der Kontrolle der Verbindungsanforderung (R) des nicht definierten Endgeräts aufweist, in dem:

i. das Heim-Gateway (1) die Verbindungsanforderung (R) mit dem Heim-Gateway (1) von einem nicht definierten Endgerät (4) empfängt, wobei die Verbindungsanforderung (R) die einzige Kennung (MAC) des nicht definierten Endgeräts enthält;
ii. das Heim-Gateway (1) die einzige Kennung (MAC) des nicht definierten Endgeräts (4), die in der Verbindungsanforderung (R) enthalten ist, mit der einzigen Kennung (MACd) des Heim-Endgeräts (4) des Speichers (12) vergleicht, wobei das Heim-Gateway den Weckschritt des Zugangspunkts (AP) im Fall der Entsprechung auslöst und den Weckschritt des Zugangspunkts (AP) im gegenteiligen Fall verhindert.

6. Verfahren nach einem der vorhergehenden Ansprüche, wobei, da das Heim-Gateway einen Speicher (12) besitzt, in dem eine Tabelle der zwischen dem Heim-Gateway (1) und mindestens einem Heim-Endgerät (2) über den Zugangspunkt (AP) aufgebauten Verbindungen gespeichert ist, das Verfahren einen Schritt des Lesens der Tabelle der Verbindungen des Speichers (12) und einen Schritt der Standby-Schaltung des Zugangspunkts (AP) enthält, wenn die dynamische Tabelle keine Verbindung enthält.

7. Heim-Gateway, das dazu bestimmt ist, mindestens ein Heim-Endgerät eines Heim-Computernetzes mit einem Telekommunikationsnetz (2) zu verbinden, zur Durchführung des Verfahrens nach einem der Ansprüche 1 bis 6, wobei das Gateway enthält:

- einen Zugangspunkt (AP), der konfiguriert ist, eine WiFi-Verbindung zwischen dem Heim-Endgerät (4) und dem Heim-Gateway (1) aufzubauen;
- einen Speicher (12), in dem eine dynamische Tabelle der Verbindungen zwischen dem Heim-Gateway (1) und mindestens einem Heim-Endgerät (4) über den Zugangspunkt (AP) gespeichert ist; und
- ein Standby-Modul (14), das eingerichtet ist, um den Zugangspunkt (AP) zyklisch in den Standby zu schalten, wenn die dynamische Tabelle keine Verbindung enthält, indem abwechselnd ein Einschalten des Zugangspunkts (AP) während einer Aktivitätsdauer (Ta) des Zugangspunkts und ein Ausschalten des Zugangspunkts (AP) während einer Ruhedauer (Ts) des Zugangspunkts ausgeführt wird, wobei das Verhältnis der Aktivitätsdauer zur Gesamtdauer eines Zyklus zwischen 0,2 und 0,8 liegt, und keine Information bezüglich der Ruhedauern übertragen wird, während denen der Zugangspunkt ausgeschaltet ist und keine Daten von dem mindestens einen Endgerät empfangen kann.

8. Computerprogramm, das Anweisungen enthält, die, wenn das Programm von einem Computer ausgeführt wird, diesen dazu führen, die Schritte des Verfahrens nach einem der Ansprüche 1 bis 6 anzuwenden.

**Claims**

1. Method of control of a domestic gateway (1) intended to connect at least one domestic terminal (4) of a computerized domestic network to a telecommunication network (2), the domestic gateway (1) comprising an access point (AP) configured to establish a WiFi connection between said domestic terminal (4) and the domestic gateway (1), the method being **characterized by** the fact that it comprises:

- a step of verifying the state of the connection between the domestic gateway (1) and said domestic terminal (4) via the access point (AP), and
- a step of cyclically placing said access point (AP) on standby if said connection is inactive, in which the access point (AP) is alternately turned on for a duration of activity (Ta) of the access point and turned off for a duration of sleep (Ts) of the access point, the ratio of the duration of activity to the total duration of a cycle lying between 0.2 and 0.8, and no information being transmitted by the access point relative to the durations of sleep during which the access point is turned off and cannot receive data from the at least one terminal.

2. Method according to Claim 1, in which, the access point (AP) comprising a plurality of functional modules, including a radio communication module configured to establish a radio connection between said domestic terminal (4) and the domestic gateway (1), the method comprises a step of placing the radio communication module of the access point (AP) on standby, in which said radio communication module is alternately turned on and turned off while the other functional modules remain turned on.

3. Method according to either of Claims 1 and 2, in which the method comprises a step of waking up the access point (AP) subsequent to the receipt, by said access point on cyclic standby, of a request for connection (R) to the domestic gateway of an undefined terminal (4).

4. Method according to Claim 3, in which the method comprises a step of control of the request for connection (R) of said undefined terminal in which the domestic gateway (1) checks whether the undefined terminal is a domestic terminal authorized to connect to said access point (A), the method engages the step of waking up said access point (AP) if the undefined terminal is an authorized terminal, the method disabling the step of waking up said access point (AP) if the undefined terminal is not an authorized terminal.

5. Method according to either of Claims 3 and 4, in which, the domestic gateway (1) possessing a memory (12) in which is stored at least one unique identifier (MACd) of a domestic terminal (4) authorized to connect to said access point (AP), the method comprises a step of control of the request for connection (R) of said undefined terminal in which:

i. the domestic gateway (1) receives the request for connection (R) to the domestic gateway (1) of an undefined terminal (4), the request for connection (R) comprising the unique identifier (MAC) of the undefined terminal;
ii. the domestic gateway (1) compares the unique identifier (MAC) of the undefined terminal (4), included in the request for connection (R), with the unique identifier (MACd) of the domestic terminal (4) of the memory (12), the domestic gateway engaging the step of waking up said access point (AP) in the event of correspondence and disabling the step of waking up said access point (AP) in the converse case.

6. Method according to one of the preceding claims, in which, the domestic gateway possessing a memory (12) in which is stored a table of the connections established between the domestic gateway (1) and at least one domestic terminal (2) via the access point (AP), the method comprises a step of reading the table of connections of the memory (12) and a step of placing the access point (AP) on standby if the dynamic table does not comprise any connection.

7. Domestic gateway intended to connect at least one domestic terminal of a computerized domestic network to a telecommunication network (2), for the implementation of the method according to one of Claims 1 to 6, the gateway comprising:

- an access point (AP) configured to establish a WiFi connection between said domestic terminal (4) and the domestic gateway (1);
- a memory (12) in which is stored a dynamic table of the connections between the domestic gateway (1) and at least one domestic terminal (4) via the access point (AP); and
- a module for placing on standby (14) designed to cyclically place said access point (AP) on standby if the dynamic table does not comprise any connection, by alternately performing a turning on of said access point (AP) for a duration of activity (Ta) of the access point and a turning off of said access point (AP) for a duration of sleep (Ts) of the access point, the ratio of the duration of activity to the total duration of a cycle lying between 0.2 and 0.8, and no information being transmitted relative to the durations of sleep during which the access point is turned off and cannot receive data from the at least one terminal.

8. Computer program comprising instructions which, when the program is executed by a computer, cause the latter to implement the steps of the method according to any one of Claims 1 to 6.

FIGURE 1

FIGURE 2

FIGURE 3

FIGURE 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100008276 A
- WO 2010124865 A